# EUROPÄISCHE PATENTSCHRIFT

(11) **EP 4 445 033 B1**
(45) Veröffentlichungstag und Bekanntmachung des Hinweises auf die Patenterteilung: **25.02.2026**
(21) Anmeldenummer: 22829730.5
(22) Anmeldetag: 01.12.2022
(51) Int. Cl.: F16B 13/00, F16B 13/06

(54) **BEFESTIGUNGSSYSTEM UND VERFAHREN ZUR MONTAGE IN EINEM UNTERGRUND**
FASTENING SYSTEM AND METHOD FOR MOUNTING IN A SUBSTRATE
SYSTÈME DE FIXATION ET PROCÉDÉ DE MONTAGE DANS UN SUBSTRAT

(30) Priorität: 09.12.2021 DE 102021214068
(43) Veröffentlichungstag der Anmeldung: 16.10.2024
(73) Patentinhaber: EJOT SE & Co. KG, 57319 Bad Berleburg (DE)
(72) Erfinder: HEINRICH, Kostja, 57319 Bad Berleburg (DE); PITZ, Michael, 35088 Battenberg (DE); ULBRICH, David, 57334 Bad Laasphe-Herbertshausen (DE)
(74) Vertreter: Bardehle Pagenberg Partnerschaft mbB Patentanwälte Rechtsanwälte
(86) Internationale Anmeldenummer: PCT/EP2022/084052
(87) Internationale Veröffentlichungsnummer: WO 2023/104632

(56) Entgegenhaltungen:
- EP-A2- 1 645 758
- GB-A- 2 310 700
- US-A1- 2019 219 084

## Beschreibung

Die vorliegende Erfindung betrifft im Allgemeinen ein Befestigungssystem und ein Verfahren zur Montage in einem Untergrund. Weiter betrifft die Erfindung auch ein Verfahren zur Herstellung eines erfindungsgemäßen Befestigungssystems.

Im Stand der Technik sind zahlreiche Systeme zur Montage in einem Untergrund bekannt, die es ermöglichen Gegenstände relativ zum Untergrund zu befestigen. Diesen bekannten Systemen ist dabei gemein, dass sie in mehrschrittigen Verfahren im Untergrund verankert werden. So sind beispielsweise Systeme aus einer Dübelhülse und einem Befestigungselement bekannt, bei dem zunächst ein Sackloch im Untergrund erzeugt wird zur Aufnahme der Dübelhülse. Nach Einbringen der Dübelhülse in das Sackloch wird das Befestigungselement in die Dübelhülse eingedreht und typischerweise durch Verformung der Dübelhülse verankert. Derartige bekannte Systeme können beispielsweise der Befestigung von Dämmstoffen relativ zu einem Untergrund oder zur Befestigung von schweren Lasten an einem Untergrund dienen.

Die bekannten Systeme haben jedoch den Nachteil, dass der Montageprozess aus mehreren Schritten besteht. In der Regel werden mindestens drei Schritte benötigt, um das System im Untergrund zu verankern, nämlich erstens das Erzeugen eines Sacklochs, zweitens das Platzieren einer Dübelhülse im Sackloch und drittens das relative Bewegen zwischen einem Befestigungselement und der Dübelhülse zum Verformen der Dübelhülse und dadurch Erzeugen einer kraftschlüssigen Verbindung zwischen Untergrund und Befestigungssystem. Während das Erzeugen des Sacklochs typischerweise für die bekannten Systeme gleich ist, können die beiden anderen Schritte für jedes System unterschiedlich sein. Beispielsweise kann im Falle eines Systems zur Befestigung eines Dämmstoffs an einem Untergrund zunächst nur eine Dübelhülse in das Sackloch eingesetzt werden und anschließend ein Befestigungselement in die Dübelhülse eingebracht werden, wobei das Befestigungselement zumindest einen Teilbereich der Dübelhülse verformt, um eine ausreichende Verankerungswirkung im Untergrund zu erzeugen. Die Tragfähigkeit wird hierbei durch die Reibung des verformten Teils der Hülse an den Wänden des Sacklochs erzeugt. Andererseits, im Fall eines typischen Schwerlastankers, wird ein System bestehend aus Dübelhülse und in der Dübelhülse angeordnetem Befestigungselement in das Sackloch eingesetzt. Anschließend wird das Befestigungselement relativ zu der Dübelhülse verdreht, um es teilweise aus der Dübelhülse herauszuziehen, wobei die Relativbewegung einen Teilbereich der Dübelhülse spreizt, um einen Hinterschnitt zu erzeugen, der die Tragfähigkeit aufbringt. Selbst wenn die expliziten Schritte der bekannten Montageprozesse verschieden sind oder variiert werden können, erfordern die bekannten Montageprozesse jedoch in jedem Fall mehrere klar voneinander getrennte Schritte.

Zudem erfordern bekannte Montageprozesse typischerweise mehrere Werkzeuge, nämlich zunächst ein Werkzeug zum Erzeugen des Sacklochs und zweitens mindestens ein anderes Werkzeug zum relativen Bewegen des Befestigungselements und der Dübelhülse. Im Fall des zuvor genannten Systems zur Befestigung von Dämmstoffen werden in der Regel eine Bohrmaschine zur Erzeugung des Sacklochs und beispielsweise ein Schraubendreher zum Einbringen des Befestigungselements in die Dübelhülse verwendet, während im Fall des zuvor genannten Systems zur Befestigung von Schwerlasten ebenfalls eine Bohrmaschine zur Erzeugung des Sacklochs verwendet wird und zusätzlich ein Schraubenschlüssel oder Steckschlüssel zum Einsatz kommt. Zudem können in einigen Fällen auch zusätzliche Werkzeuge zum Entfernen von Bohrmehl, das bei der Erzeugung des Sacklochs anfällt, nötig sein.

Weitere im Stand der Technik bekannte Befestigungssysteme sind in den Dokumenten GB 2 310 700 A, EP 1 645 758 A2 und US 2019/219084 A1 beschrieben.

Die Aufgabe, die sich die vorliegende Erfindung daher stellt, ist es die vorgenannten Nachteile zu überwinden und ein System bereitzustellen, das den Montageprozess vereinfacht.

Diese Aufgabe wird gelöst durch ein erfindungsgemäßes Befestigungssystem, ein erfindungsgemäßes Verfahren zur Montage eines Befestigungssystems und ein erfindungsgemäßes Verfahren zur Herstellung eines Befestigungssystems, wie sie jeweils in den unabhängigen Ansprüchen beschrieben werden. Bevorzugte und vorteilhafte Ausgestaltungen finden sich in den abhängigen Ansprüchen und in der folgenden Beschreibung.

Das erfindungsgemäße Befestigungssystem ist konfiguriert zur Montage an einem Untergrund. Der Untergrund kann ein Verankerungsgrund oder ein mehrschichtiger Untergrund, beispielsweise bestehend aus einem oder mehreren Dämmstoffen und einem Verankerungsgrund, sein. Das erfindungsgemäße Befestigungssystem weist eine Hülse und ein inneres Element auf. Dabei weist die Hülse einen Haltebereich und eine Spreizzone auf. Weiter weist die Hülse an einem ersten ihrer zwei Enden eine Bohröffnung und an dem anderen Ende eine Werkzeugöffnung auf. Während des Montagevorgangs setzt der Haltebereich an einem bestimmten Punkt während der Montage einem weiteren Eindringen der Hülse in den Untergrund eine Kraft entgegen. Im Rahmen der vorliegenden Erfindung gibt es verschiedene Möglichkeiten, wie der Haltebereich ausgestaltet sein kann. Beispielsweise kann der Haltebereich als ein umfänglich am ersten Ende ausgebildeter Vorsprung realisiert sein. Mit Bezug zu weiteren bevorzugten Ausführungsformen werden später noch weitere Möglichkeiten aufgezeigt, wie der Haltebereich ausgestaltet werden kann. Die Spreizzone ist zumindest teilweise zwischen dem Haltebereich und der Bohröffnung angeordnet. Die Hülse kann im Wesentlichen durch einen Hohlzylinder gebildet sein, wobei sich die Bohröffnung und die Werkzeugöffnung dann beispielsweise am Deckel beziehungsweise am Boden des Hohlzylinders befinden.

Während der Montage ist das innere Element zumindest teilweise innerhalb der Hülse angeordnet und relativ zur Hülse beweglich. Eine entsprechende Anordnung des inneren Elements zumindest teilweise innerhalb der Hülse kann bevorzugt bereits während der Herstellung erfolgen, oder aber alternativ erst unmittelbar vor der Montage erfolgen. Weiter weist das innere Element einen Bohrbereich und einen Spreizbereich auf. Der Bohrbereich weist mindestens ein Schneidelement auf. Das mindestens eine Schneidelement ist geeignet, um bei Verwendung des Befestigungssystem in den Untergrund einzuschneiden. Der Bohrbereich ragt zumindest teilweise aus der Bohröffnung der Hülse heraus. Dies bedeutet, dass sich zumindest ein Abschnitt des Bohrbereichs außerhalb der Hülse befindet. Hierbei kann sich beispielsweise der gesamte Bohrbereich oder ein Abschnitt des Bohrbereichs außerhalb der Hülse befinden, um einen Kontakt zwischen Bohrbereich und Untergrund beim Montagevorgang zu erlauben. Wie der Fachmann erkennen wird, ist der Begriff "Bohrbereich" nicht dahingehend zu verstehen, dass der Bohrbereich ausschließlich auf Bohrprozesse beschränkt ist.

Vielmehr kann der Bohrbereich auch ausgestaltet sein, um ein Meißeln zu ermöglichen. Beispielsweise kann das zumindest eine Schneidelement des Bohrbereichs zum Einschneiden in einen Untergrund angepasst sein oder das zumindest eine Schneidelement kann zum Einmeißeln in einen harten Untergrund angepasst sein.

Der Spreizbereich des inneren Elements ist angepasst bei einer Bewegung des Spreizbereichs in der Hülse und relativ zur Hülse in Richtung von der Werkzeugöffnung zur Bohröffnung, d.h. bei der Montage weiter in Richtung Untergrund, die Spreizzone der Hülse aufzuspreizen. Dies bedeutet, dass sich das innere Element beim Montagevorgang relativ zur Hülse bewegt und durch diese Bewegung der Spreizbereich, der sich zumindest teilweise innerhalb der Hülse befindet, in einer Richtung von der Werkzeugöffnung zur Bohröffnung bewegt wird. Hierdurch übt der Spreizbereich eine Kraft auf die Spreizzone der Hülse aus. Diese Kraft kann ein Mitführen der Hülse mit der Bewegung des inneren Elements verursachen. Weiter kann der Spreizbereich bei Überschreiten einer Mindestkraft ein Spreizen der Spreizzone durch den Spreizbereich verursachen. Da der Haltebereich dem weiteren Eindringen der Hülse in den Untergrund eine Kraft entgegensetzt, kann der Haltebereich als Setztiefenbegrenzer ausgebildet sein.

Der Vorteil, den das beschriebene Befestigungssystem gegenüber dem Stand der Technik bietet, besteht darin, dass das Befestigungssystem in einem einzigen Schritt an einem Untergrund montiert werden kann. Hierzu kann das zumindest eine Schneidelement des inneren Elements in den Untergrund eingebracht werden (beispielsweise dadurch, dass das innere Element und damit das zumindest eine Schneidelement in Rotation versetzt wird) und dadurch ein Sackloch im Untergrund erzeugen. Dabei führt das innere Element die Hülse mit, wodurch die Hülse durch die Bewegung des inneren Elements in das Sackloch hineingezogen wird. Das Mitführen der Hülse mit der Bewegung des inneren Elements erfolgt solange bis der Haltebereich der Hülse ein weiteres Eindringen in den Untergrund verhindert. Dabei verhindert der Haltebereich ein weiteres Eindringen der Hülse in den Untergrund dadurch, dass er dem weiteren Eindringen eine Kraft entgegensetzt. Im Rahmen der vorliegenden Erfindung kann der Haltebereich auf unterschiedlichste Arten ausgestaltet sein. Eine Möglichkeit ist, dass der Haltebereich einen Vorsprung aufweist, der ein Eindringen des Haltebereichs in den Untergrund verhindert. Andere Ausgestaltung sind auch möglich und Beispiele für derartige andere Ausgestaltungen werden weiter unten beschrieben. Die Kraft, die der Haltebereich dem weiteren Eindringen der Hülse in den Untergrund entgegensetzt, ist dem Vortrieb entgegengerichtet und verhindert eine weitere Mitführung der Hülse mit der Bewegung des inneren Elements und somit das weitere Eindringen der Hülse in den Untergrund. Dadurch kommt es zu einer Relativbewegung zwischen dem inneren Element und der Hülse. Infolge dieser Relativbewegung spreizt der Spreizbereich des inneren Elements die Spreizzone der Hülse und erzeugt so eine kraftschlüssige Verankerung der Hülse in dem Untergrund.

Somit erfolgen die Erzeugung eines Sacklochs im Untergrund, das Einführen der Hülse in den Untergrund und die Spreizung der Spreizzone der Hülse (d.h. die Verankerung) allesamt in einem Arbeitsschritt durch den Vortrieb des inneren Elements in den Untergrund hinein. Weiter bedarf es für den vollständigen Montageprozess des Befestigungselements im Untergrund nur eines einzigen Setzwerkzeugs, das geeignet ist, das zumindest eine Schneidelement des inneren Elements anzutreiben, beispielsweise durch Rotation und/oder Schlag, und dadurch einen Vortrieb des inneren Elements in den Untergrund hinein zu erzeugen. Es wird daher nicht nur das Verfahren zur Montage eines Befestigungssystems vereinfacht, sondern gleichzeitig die Zahl der einzusetzenden Werkzeuge reduziert.

Im Folgenden werden bevorzugte Ausführungsformen des erfindungsgemäßen Befestigungssystems beschrieben.

Die Spreizzone der Hülse weist im ungespreizten Zustand einen ersten äußeren Durchmesser auf und der Bohrbereich des inneren Elements weist einen maximalen zweiten äußeren Durchmesser auf. In einer bevorzugten Ausführungsform ist der Bohrbereich an seinem vordersten Ende, das zuerst auf den Untergrund auftrifft, im Wesentlichen spitz und weitet sich in Richtung seines hinteren Endes auf. Hierdurch ändert sich der äußere Durchmesser des Bohrbereichs abhängig von der Entfernung von der Spitze. Darüber hinaus kann das zumindest eine Schneidelement des Bohrbereichs als einer oder mehrere an der Umfangsfläche des Bohrbereichs gebildete Vorsprünge ausgestaltet sein, die sich nicht notwendigerweise über den kompletten Umfang erstrecken. Daher wird im Folgenden von einem maximalen äußeren Durchmesser des Bohrbereichs gesprochen. Dies ist in einer bevorzugten Ausführungsform der Durchmesser des größten Umfangkreises des Bohrbereichs. Zur Abgrenzung gegenüber dem äußeren Durchmesser der Spreizzone der Hülse, wird dieser maximale Durchmesser des Bohrbereichs als maximaler zweiter äußerer Durchmesser bezeichnet. Dieser maximale zweite äußere Durchmesser des Bohrbereichs definiert den inneren Durchmesser des Sacklochs. Bevorzugt ist der maximale zweite äußere Durchmesser gleich dem ersten äußeren Durchmesser, das heißt dem äußeren Durchmesser des ungespreizten Spreizbereichs der Hülse, oder größer als der erste äußere Durchmesser der Hülse. Dies erlaubt ein widerstandsarmes Hineingleiten der Hülse in das Sackloch während des Montageprozesses bis der Haltebereich ein weiteres Eindringen verhindert.

Der Fachmann wird verstehen, dass eine Gleichheit der Durchmesser in diesem Zusammenhang bedeutet, dass die Durchmesser im Wesentlichen gleich sein können. Im Wesentlichen gleich bedeutet in diesem Zusammenhang, dass gewisse Verarbeitungstoleranzen zugelassen sind. Relevant ist, dass der erste und der zweite äußere Durchmesser zum einen derart aufeinander abgestimmt sind, dass Sie ein Eindringen der Hülse in das Sackloch - insbesondere durch Mitnahme mit der Bewegung des inneren Elements - erlauben, zum anderen aber auch zulassen, dass die Spreizung der Spreizzone der Hülse eine ausreichend starke Verankerung der Hülse im Sackloch bereitstellen kann.

In einer weiteren bevorzugten Ausführungsform ist der Spreizbereich des inneren Elements derart ausgestaltet, dass der Spreizbereich innerhalb der Hülse frei rotieren kann, so dass ein Drehen des inneren Elements nicht notwendigerweise zu einer Drehung der Hülse führt. Hierdurch lässt sich das innere Element antreiben, um ein Sackloch im Untergrund zu erzeugen, ohne, dass die Fähigkeit des inneren Elements die Hülse bei einem Vortrieb in den Untergrund hinein mitzunehmen beeinträchtigt wird. Dies kann beispielsweise durch eine konische Gestaltung des Spreizbereichs erreicht werden. Dies kann aber auch dadurch erreicht werden, dass die Querschnitte des Spreizbereichs und des Inneren der Hülse keine komplementäre Geometrie besitzen. Weiterhin erlaubt die konische Gestaltung ein Auftreffen des Spreizbereichs auf die Spreizzone beim Vortrieb des inneren Elements und eine sukzessive Spreizung der Spreizzone beim weiteren Vortrieb des inneren Elements. In anderen bevorzugten Ausführungsformen kann der Spreizbereich jedoch auch stufenförmig ausgebildet sein, wobei die Stufen mit zunehmender Entfernung zum Bohrbereich einen größeren äußeren Durchmesser besitzen. In wieder anderen bevorzugten Ausführungsformen kann der Spreizbereich aber auch als Gewinde ausgebildet sein oder als eine Rändelung.

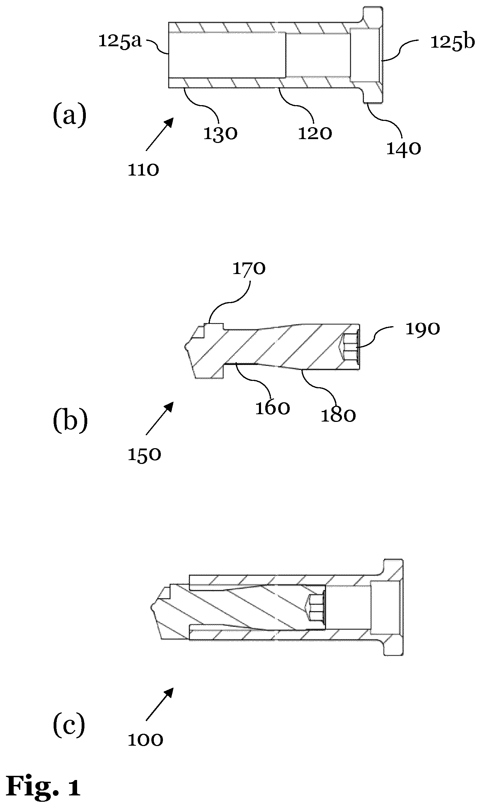

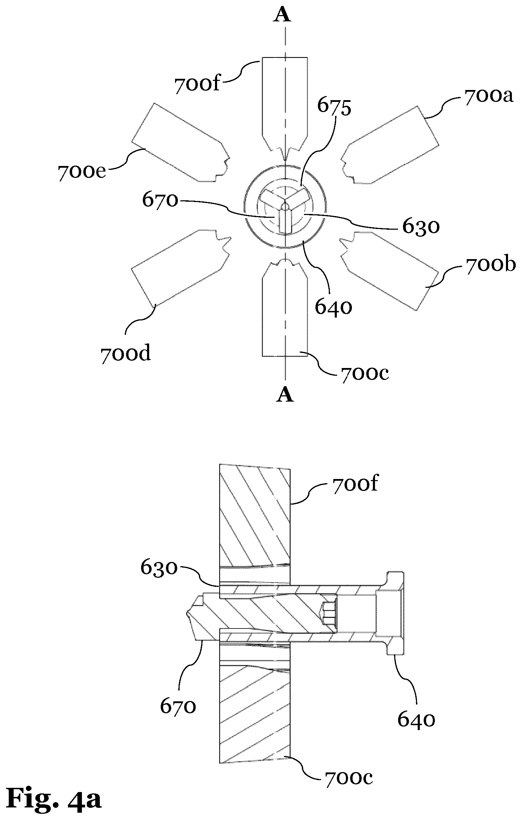

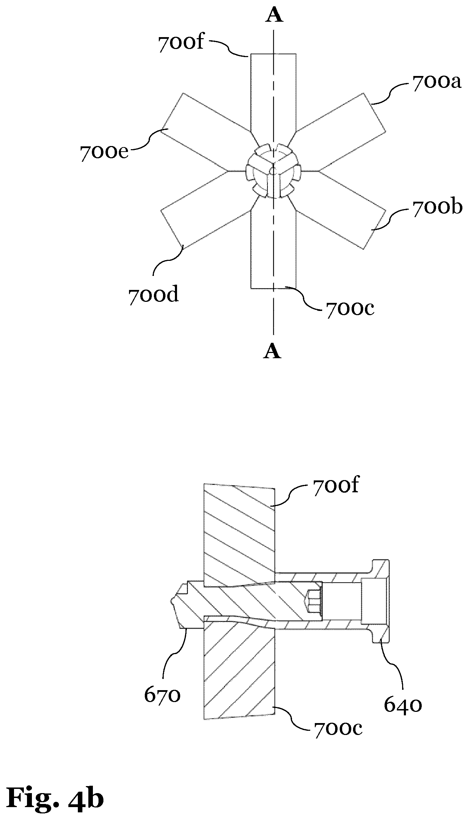

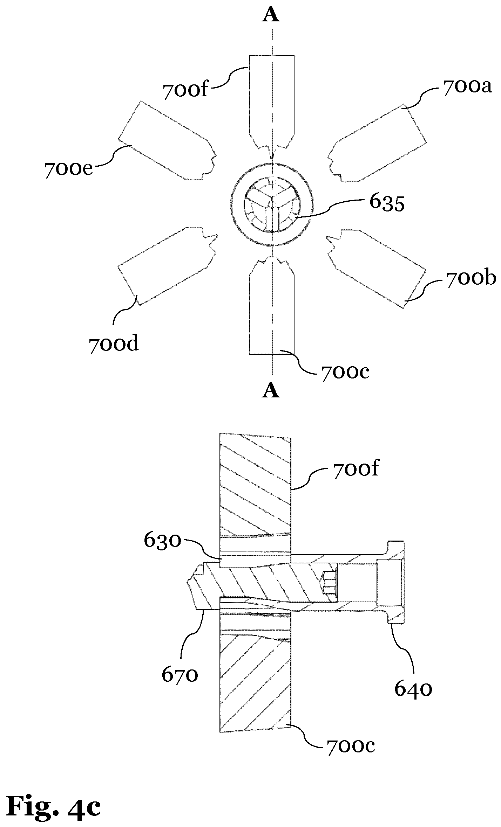

Folglich besitzt das innere Element bevorzugt eine Form mit verschiedenen äußeren Durchmessern. Hierbei besitzt der Bohrbereich den größten äußeren Durchmesser. Der Spreizbereich besitzt einen äußeren Durchmesser, der unterschiedlich ist abhängig von der Entfernung vom Bohrbereich. Bevorzugt ist der äußere Durchmesser des Spreizbereichs an der Stelle am größten, die am weitesten vom Bohrbereich entfernt ist. Dieser größte, also maximale, äußere Durchmesser des Spreizbereichs ist dabei jedoch bevorzugt geringer als der äußere Durchmesser des Bohrbereichs. Zwischen dem Bohrbereich und dem Spreizbereich ist der Durchmesser des inneren Elements geringer als der äußere Durchmesser des Bohrbereichs und der maximale äußere Durchmesser des Spreizbereichs. Hieraus ergibt sich eine Art Einkerbung, die auch als Mulde bezeichnet werden kann, zwischen dem Bohrbereich und dem Spreizbereich. Die Mulde erlaubt es, dass die Spreizzone der ungespreizten Hülse das innere Element im Bereich der Mulde umklammert. Dies wird weiter deutlich mit Bezug auf die beigefügten Zeichnungen, insbesondere die Figuren 1 und 4.

In einer weiteren bevorzugten Ausführungsform kann das zumindest eine Schneidelement als Schneidkante ausgebildet sein. Weiter kann der Bohrbereich in einer bevorzugten Ausführungsform mehrere Schneidelemente aufweisen, die jeweils als Schneidkanten ausgebildet sind. Bevorzugt sind diese mehreren Schneidkanten dabei auf der Oberfläche des Bohrbereichs derart angeordnet, dass sie sich entlang der Oberfläche radial von der Mitte der Oberfläche (d.h. der Spitze des Bohrbereichs) nach außen erstrecken. Bevorzugt sind drei Schneidelemente vorgesehen, die als Schneidkanten ausgebildet sind. Weiter bevorzugt weisen die drei Schneidkanten dabei einen Winkel von 120° zueinander auf.

In einer weiteren bevorzugten Ausführungsform kann das innere Element zumindest teilweise aus einem Metall gebildet sein. Beispielsweise kann die zumindest teilweise Bildung des Bohrbereichs - insbesondere des zumindest einen Schneidelements - aus einem Metall einen Vortrieb in harten Untergründen wie Beton oder Mauerwerk ermöglichen. Der Bohrbereich beziehungsweise mindestens das zumindest eine Schneidelement kann beispielsweise aus gehärtetem Stahl hergestellt sein. Alternativ kann das zumindest eine Schneidelement auch gebildet werden durch Aufbringen von gesintertem Material auf einen aus Edelstahl hergestellten Bohrbereich.

Alternativ oder zusätzlich kann die Hülse zumindest teilweise aus einem Metall gebildet sein. Eine Bildung der Hülse aus einem Metall kann beispielsweise empfehlenswert sein für Schwerlastanker, bei denen eine Spreizung einer metallischen Spreizzone der Hülse einen Hinterschnitt im Untergrund erzeugt und dadurch eine besonders hohe Auszugskraft bereitstellt. Ein geeignetes Metall wäre beispielsweise Stahl. Es ist aber auch möglich zumindest die Hülse aus einem Kunststoff herzustellen, was beispielsweise für ein Befestigungssystem zur Befestigung von Dämmstoffen empfehlenswert sein kann, um Wärmebrücken zu vermeiden.

In weiteren bevorzugten Ausführungsformen sind die Hülse und/oder das innere Element derart ausgestaltet, einen Abtransport von Bohrmehl, das bei der Montage anfällt, zu erlauben. Ein Abtransport von Bohrmehl kann beispielsweise dadurch ermöglicht werden, dass eine oder mehrere zusätzliche Öffnungen in der Hülse und/oder dem inneren Element vorgesehen sind oder ein Kanal beispielsweise zwischen der Hülse und dem inneren Element gebildet wird.

Beispielsweise können Öffnungen seitlich in der Hülse vorgesehen sein, durch die anfallendes Bohrmehl während des Montageprozesses in das Innere der Hülse gelangen kann. Bevorzugt kann das Bohrmehl von hier aus dem Befestigungssystem entfernt werden, beispielsweise über eine Absaugvorrichtung eines Setzwerkzeugs oder durch Kräfte während des Montageprozesses, die dadurch entstehen, dass das Befestigungssystem in den Untergrund eingetrieben wird. Alternativ oder zusätzlich können eine oder mehrere zusätzliche Öffnungen am Bohrbereich des inneren Elements gebildet werden. Auch in diesem Fall kann ein Setzwerkzeug mit einer Absaugvorrichtung verwendet werden, die mit dieser einen oder den mehreren zusätzlichen Öffnungen zusammenwirkt, um das Bohrmehl zu entfernen.

Der Kanal kann innerhalb der Hülse gebildet sein. In einer anderen bevorzugten Ausführungsform kann der Kanal an einer Außenseite der Hülse gebildet sein. Alternativ kann der Kanal zum Abtransport von Bohrmehl auch innerhalb des inneren Elements gebildet sein. Ist der Kanal innerhalb des inneren Elements gebildet, so kann das Setzwerkzeug, das zum Antreiben des inneren Elements verwendet wird, einen entsprechenden Kanal aufweisen, der beim Eingreifen des Setzwerkzeugs in das innere Element mit dem Kanal im Inneren des inneren Elements verbunden wird. Dies ermöglicht beispielsweise die Absaugung von Bohrmehl, wenn das Setzwerkzeug mit einer Absaugvorrichtung ausgerüstet ist.

Der Bohrbereich des inneren Elements kann im Fall von einer oder mehreren zusätzlichen Öffnungen oder einem Kanal bevorzugt so ausgestaltet sein, dass der Bohrbereich einen Saugbohrer bildet, an den eine Absaugvorrichtung eines Setzwerkzeugs angeschlossen werden kann. Besonders bevorzugt weist das innere Element eine Aufnahme auf, die mit zumindest einer der zusätzlichen Öffnungen oder dem Kanal in Verbindung steht, beispielsweise indem ein Pfad gebildet ist, durch den das Bohrmehl durch das innere Element gelangen kann. Bevorzugt ist das Setzwerkzeug so ausgestaltet, dass es angepasst ist, in die Aufnahme eingreifen zu können und dort eine Verbindung einer Saugvorrichtung des Setzwerkzeugs mit dem im inneren Element gebildeten Pfad herstellen zu können.

Eine oder mehrere zusätzliche Öffnungen oder ein Kanal zum Abtransport von Bohrmehl bieten den Vorteil, dass sich das Bohrmehl nicht im Bereich des Bohrbereichs sammeln und einen Vortrieb des inneren Elements und/oder der Hülse verhindern kann. Beim Vortrieb des inneren Elements kann das Bohrmehl in das Innere der Hülse oder in den Kanal gelangen und von hier aus abtransportiert werden.

Der Haltebereich ist angepasst ein weiteres Eindringen der Hülse in den Untergrund zu verhindern, indem er dem weiteren Eindringen der Hülse in den Untergrund eine Kraft entgegensetzt. Somit verursacht der Haltebereich bei weiterem Eintreiben des inneren Elements in den Untergrund ein Aufspreizen der Spreizzone. Im Rahmen der vorliegenden Erfindung werden mehrere Beispiele für die Ausgestaltung eines derartigen Haltebereichs beschrieben. Der Fachmann wird aber erkennen, dass diese Funktion auch mit anderen Mittel bewirkt werden kann. Beispielsweise kann der Haltebereich umfänglich als Vorsprung an der Hülse ausgestaltet sein. In einer bevorzugten Ausführungsform kann der Haltebereich der Hülse aber auch als Halteteller ausgebildet sein. Ein Halteteller kann einen flachen Ring, einen ringförmigen Vorsprung oder eine ringförmige Scheibe bilden, der umfänglich an der Hülse angeordnet ist. Bevorzugterweise kann der Halteteller an dem Ende der Hülse, das die Werkzeugöffnung aufweist, angeordnet sein. Ein derartiger Halteteller eignet sich besonders zur Verwendung mit einem mehrschichtigen Untergrund, der beispielsweise einen Verankerungsgrund und einen Dämmstoff aufweist. In diesem Fall kann der Halteteller zur Befestigung des Dämmstoffs an dem Verankerungsgrund dienen. Der Fachmann wird verstehen, dass auch eine zusätzliche Komponente, wie eine auf dem Dämmstoff aufliegende Abdichtungsbahn, durch den Halteteller relativ zum Untergrund gehalten werden kann.

In einer weiteren bevorzugten Ausführungsform kann die Hülse zusätzlich zu einem ersten Haltebereich auch einen weiteren Haltebereich aufweisen, der als ein Halteteller ausgestaltet ist. In diesem Fall dient der weitere als Halteteller ausgestaltete Haltebereich lediglich dazu einen Dämmstoff relativ zum Untergrund zu halten, während der erste Haltebereich an einem bestimmten Punkt während der Montage die Kraft aufbringt, um ein weiteres Eindringen der Hülse in den Untergrund und so dazu führt, dass die Spreizzone gespreizt wird. In diesem Fall ist der erste Haltebereich bevorzugt zwischen der Bohröffnung und dem Halteteller platziert.

In einer weiteren bevorzugten Ausführungsform kann das innere Element eine Aufnahme für ein Setzwerkzeug aufweisen. Vorzugsweise kann ein Setzwerkzeug durch die Werkzeugöffnung in das Innere der Hülse eingeführt werden und dort in die Aufnahme am inneren Element eingreifen. Eine derartige Ausgestaltung hat den Vorteil, dass das innere Element direkt vom Setzwerkzeug angetrieben werden kann, um einen Vortrieb im Untergrund zu erzeugen. Alternativ kann auch das innere Element derart ausgestaltet sein, dass es eine Durchführung besitzt, um ein Eingreifen des Setzwerkzeugs direkt in eine am Bohrbereich angeordnete Aufnahme zu ermöglichen. Beispielsweise kann das innere Element dazu zumindest abschnittsweise hohl gebildet sein oder Führungsschienen für das Setzwerkzeug aufweisen.

In einer weiteren bevorzugten Ausführungsform können das innere Element und die Hülse im ungespreizten Zustand über eine Solltrennstelle verbunden sein. Sind die Hülse und das innere Element aus Metall hergestellt, kann beispielsweise eine dünne Schweißnaht im Bereich der Spreizzone zwischen innerem Element und Hülse angebracht sein. Im Fall einer aus Kunststoff hergestellten Hülse kann beispielsweise eine Solltrennstelle zwischen dem inneren Element und der Hülse aufgespritzt werden. Eine Solltrennstelle bietet den Vorteil, dass ein vorzeitiges Aufspreizen der Spreizzone, die beispielsweise bei harten Untergründen durch starke Vibrationen des Setzwerkzeugs möglich sein kann, verhindert wird.

Die zuvor beschriebenen Ausführungsformen des Befestigungselements sind nicht exklusiv, sondern können kombiniert werden, wodurch ihre technischen Effekte kombiniert werden und zusammenwirken können.

Weiter wird die vorliegende Aufgabe auch durch ein erfindungsgemäßes Verfahren zur Montage eines Befestigungssystems an einem Untergrund gelöst. Das erfindungsgemäße Verfahren ist geeignet ein Befestigungssystem in einem Untergrund zu verankern, wobei das Befestigungssystem eine Hülse und ein inneres Element aufweist. Weiter weist die Hülse auf einen Haltebereich, eine Spreizzone und an einem ihrer zwei Enden eine Bohröffnung und an dem anderen Ende eine Werkzeugöffnung, wobei die Spreizzone zumindest teilweise zwischen dem Haltebereich und der Bohröffnung angeordnet ist. Das innere Element ist zumindest teilweise innerhalb der Hülse angeordnet und relativ zur Hülse beweglich. Das innere Element weist einen Bohrbereich und einen Spreizbereich auf, wobei der Bohrbereich zumindest ein Schneidelement aufweist und der Bohrbereich zumindest teilweise aus der Bohröffnung der Hülse herausragt.

Das Verfahren weist auf Eintreiben des zumindest einen Schneidelements des inneren Elements und gleichzeitiges Mitführen der Hülse mit der Bewegung des inneren Elements solange bis der Haltebereich der Hülse einem weiteren Mitführen der Hülse eine Kraft entgegensetzt sowie weiteres Eintreiben des inneren Elements in den Untergrund, wodurch eine Relativbewegung zwischen innerem Element und Hülse erzeugt wird, und gleichzeitiges Spreizen der Spreizzone der Hülse mit dem Spreizbereich des inneren Elements durch die Relativbewegung.

Das im erfindungsgemäßen Verfahren zur Montage genutzte Befestigungssystem kann eines der zuvor beschriebenen Befestigungssysteme sein. Sollte ein Befestigungssystem zur Montage eines Dämmstoffs verwendet werden, so versteht sich, dass der Untergrund sowohl einen Verankerungsgrund als auch den Dämmstoff umfasst, so dass das Befestigungssystem zunächst in den Dämmstoff und anschließend in den Verankerungsgrund eingetrieben wird.

Weiter wird die vorliegende Aufgabe auch durch ein erfindungsgemäßes Verfahren zur Herstellung eines Befestigungssystems zur Montage an einem Untergrund gelöst. Das erfindungsgemäße Verfahren weist auf Bereitstellen einer Vielzahl von Präge- und/oder Stanzwerkzeugen und Bereitstellen eines Hülsenrohlings, wobei der Hülsenrohling eine im Wesentlichen zylindrische Form aufweist sowie Bereitstellen eines inneren Elements, wobei das innere Element einen Bohrbereich und einen Spreizbereich aufweist und wobei der Bohrbereich zumindest ein daran angeordnetes Schneidelement aufweist. Ein Abschnitt des inneren Elements wird in dem Hülsenrohling platziert und es erfolgt ein umfängliches Einpressen zumindest eines Abschnitts des Hülsenrohlings auf den Abschnitt des inneren Elements und dadurch Bilden einer Spreizzone in dem eingepressten Abschnitt. Der Abschnitt des inneren Elements, der in dem Hülsenrohling platziert wird, weist zumindest einen Teil des Spreizbereichs auf. Der Fachmann wird verstehen, dass das Befestigungssystem neben einem Verpressen mittels Präge- und/oder Stanzwerkzeugen auch durch Walzen gefügt werden kann, ohne von der Lehre der vorliegenden Erfindung abzuweichen.

Der wesentliche Vorteil, den das erfindungsgemäße Herstellungsverfahren bietet, ist die relative Anordnung einer Hülse und eines inneren Elements, wobei der Bohrbereich zumindest teilweise außerhalb der Hülse angeordnet sein kann und der Spreizbereich des inneren Elements zumindest teilweise innerhalb der Hülse angeordnet ist.

Im erfindungsgemäßen Herstellungsverfahrens ist der Spreizbereich des inneren Elements konisch geformt und das umfängliche Einpressen des Abschnitts des Hülsenrohlings geschieht auf dem konisch geformten Spreizbereich des inneren Elements.

In einer weiteren bevorzugten Ausführungsform weist das umfängliche Einpressen eines Abschnitts des Hülsenrohlings weiter auf Erzeugen zumindest einer Solltrennstelle in der durch das Einpressen gebildeten Spreizzone. Ein Spreizen der Spreizzone kann dann beispielsweise durch Auftrennen der Solltrennstelle möglich sein. Vorteilhafterweise geschieht die Bildung der Solltrennstelle direkt bei Bildung der Spreizzone durch die Präge- oder Stanzwerkzeuge, die die Spreizzone auf dem inneren Element formen, so dass das Befestigungssystem in möglichst wenigen Schritten hergestellt werden kann. Weiter werden durch das umfängliche Einpressen bevorzugterweise mehrere Solltrennstellen gebildet, in einem bevorzugten Beispiel drei Solltrennstellen. Bevorzugterweise sind die mehreren Solltrennstellen umfänglich um den gesamten Umfang der Hülse gelegen, bevorzugterweise in einer symmetrischen Weise. In einem Fall von drei Solltrennstellen kann sich je eine Solltrennstelle nach einem Drittel des Umfangs befinden.

Die zuvor beschriebenen Ausführungsformen des Herstellungsverfahrens des Befestigungselements sind nicht exklusiv, sondern können kombiniert werden, wodurch ihre technischen Effekte kombiniert werden und zusammenwirken können.

Die beigefügten Zeichnungen veranschaulichen das erfindungsgemäße Befestigungssystem und sowie das erfindungsgemäße Montageverfahren und das erfindungsgemäße Herstellungsverfahren anhand von Ausführungsbeispielen im Vergleich zum Stand der Technik. Es zeigen:
- Figur 1a,b,c: Querschnitte eines erfindungsgemäßen Befestigungssystems gemäß einer beispielhaften Ausführungsform, wobei (a) eine erfindungsgemäße Hülse, (b) ein erfindungsgemäßes inneres Element und (c) ein zusammengesetztes Befestigungssystem zeigt,

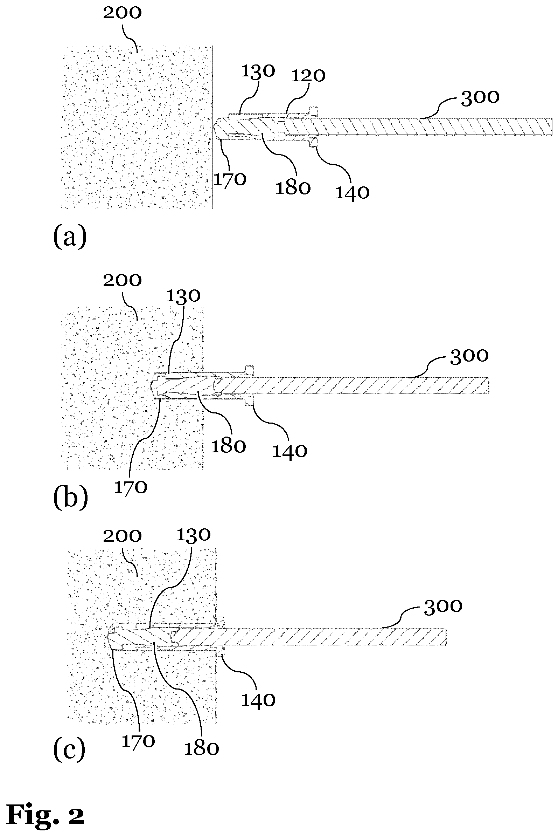

- Figur 2: Illustration eines Montagevorgangs eines Befestigungssystems gemäß der Ausführungsform aus Figur 1, wobei (a) eine Ausgangsstellung eines Befestigungssystem vor einem Untergrund, (b) das Herstellen eines Sacklochs im Untergrund und gleichzeitigen Vortrieb des Befestigungssystems und (c) das Spreizen der Spreizzone der Hülse des Befestigungssystems durch weiteren Vortrieb des Befestigungssystems zeigen.

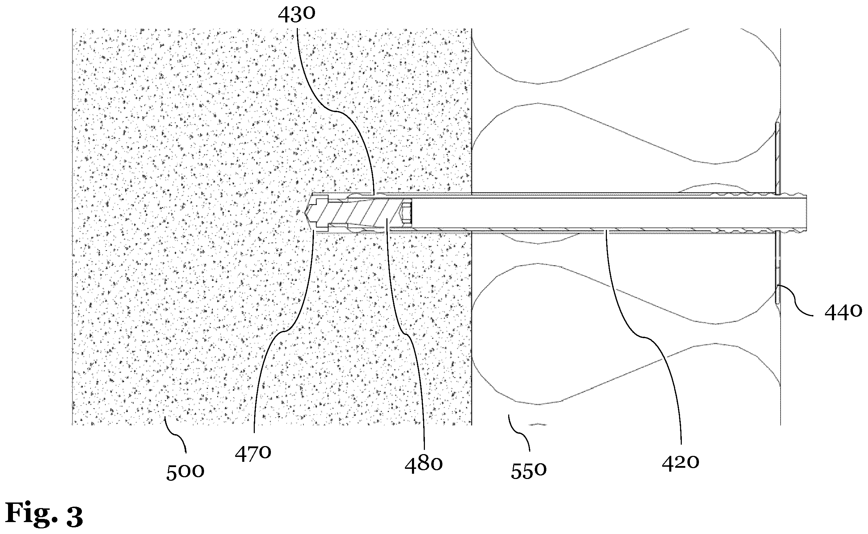

- Figur 3: Querschnitt eines erfindungsgemäßen Befestigungssystems gemäß einer anderen beispielhaften Ausführungsform mit einem Halteteller für eine Dämmstoffplatte,
- Figur 4a,b,c: Schematische Darstellung eines Herstellungsverfahrens eines erfindungsgemäßen Befestigungssystems, wobei (a) einen Ausgangszustand zu Beginn des Herstellungsverfahrens mit Präge- und/oder Stanzwerkzeugen in Ausgangsstellung zeigt, (b) einen Zwischenschritt während des Herstellungsverfahrens mit Präge- und/oder Stanzwerkzeugen in einer in einen Hülsenrohling eingepressten Zustand zeigt und (c) die Beendigung des Herstellungsverfahrens zeigt, bei dem die Präge- und/oder Stanzwerkzeuge wieder in die Ausgangsstellung zurückgekehrt sind. In allen drei Zeichnungsbestandteilen ist jeweils eine Draufsicht und eine Querschnittsansicht gezeigt.

Figur 1 zeigt Querschnitte eines erfindungsgemäßen Befestigungssystems 100 gemäß einer beispielhaften Ausführungsform. Das erfindungsgemäße Befestigungssystem 100 weist eine Hülse 110 und ein inneres Element 150 auf. Die Hülse 110 ist beispielhaft in Figur 1 (a) gezeigt. Die Hülse 110 bildet einen Hohlzylinder 120 und besitzt zwei offene Enden 125a, 125b, wobei das eine Ende 125a als Bohröffnung bezeichnet wird und das andere Ende 125b als Werkzeugöffnung bezeichnet wird. In der hier gezeigten Ausführungsform befindet sich die Bohröffnung am Ende 125a (erstes Ende). Weiter weist die Hülse am ersten Ende 125a eine Spreizzone 130 auf. An dem Ende 125b, an dem sich die Werkzeugöffnung befindet (zweites Ende), weist die Hülse einen Haltebereich 140 auf. In der Ausführungsform aus Figur 1 (a) ist der Haltebereich 140 als ein umfänglich am zweiten Ende 125b der Hülse umlaufender Vorsprung gebildet. Der Vorsprung ist geeignet auf einem Untergrund aufzuliegen. Die Spreizzone 130 der Hülse 110 weist mehrere Solltrennstellen (nicht bildlich dargestellt) auf, die sich beim Spreizen der Spreizzone 130 auftrennen und ein Spreizen der Spreizzone 130 ermöglichen.

Figur 1 (b) zeigt ein inneres Element 150 des erfindungsgemäßen Befestigungssystems 100. Das innere Element 150 weist einen Spreizbereich 180 und einen Bohrbereich 170 auf. Erfindungsgemäß ist der Spreizbereich 180 konisch ausgebildet. Die Zeichnung zeigt eine bevorzugte Ausführungsform, in der der Bohrbereich 170 einen größeren Durchmesser aufweist als der Spreizbereich 180. Zusätzlich weist der Bereich 160 zwischen dem Bohrbereich 170 und dem Spreizbereich 180 einen Durchmesser auf, der geringer ist als sowohl der äußere Durchmesser des Bohrbereichs 170 als auch der maximale äußere Durchmesser des Spreizbereichs 180. Hierdurch wird ermöglicht, dass die Spreizzone 130 während der Herstellung des Befestigungssystem 100 beispielsweise auf den Bereich 160 zwischen Bohrbereich 170 und den Spreizbereich 180 verpresst werden kann. Mit anderen Worten bildet der Bereich 160 zwischen dem Bohrbereich 170 und dem Spreizbereich 180 eine Mulde 160 und die ungespreizte Spreizzone 130 der Hülse 110 kann in die Mulde 160 eingreifen.

Figur 1 (c) zeigt das erfindungsgemäße Befestigungssystem 100 bestehend aus der Hülse 110 aus Figur 1 (a) und dem sich zumindest teilweise innerhalb der Hülse 110 befindlichen inneren Element 150 aus Figur 1 (b). Es zeigt sich, dass der maximale äußere Durchmesser des Bohrbereichs 170 des inneren Elements 150, also der Durchmesser, der den inneren Durchmesser des Sacklochs bestimmt, im Wesentlichen gleich dem äußeren Durchmesser der Hülse 110 (ohne Berücksichtigung des Haltebereichs) ist. Hierdurch wird ermöglicht, dass der Spreizbereich 180 des inneren Elements die Hülse 110 beim Vortrieb in den Untergrund mitführen kann und die Hülse 110 in das Sackloch solange eingleitet bis der Haltebereich 140 der Hülse 110 auf den Untergrund trifft. Ein weiterer Vortrieb des inneren Elements 150 in den Untergrund führt dann zu einer Relativbewegung zwischen innerem Element 150 und Hülse 110 und dadurch zu einer Spreizung der Spreizzone 130 durch den Spreizbereich 180 des inneren Elements 150.

Figur 2 zeigt eine Illustration eines Montagevorgangs eines Befestigungssystems 100 gemäß der Ausführungsform aus Figur 1. Hierbei zeigt (a) eine Ausgangsstellung eines Befestigungssystem 100, das sich vor einem Untergrund 200 befindet. Das bedeutet, Figur 2 (a) zeigt den Zustand vor Beginn des Montagevorgangs bei Bereitstellung des Befestigungssystems 100.

Durch Eindringen des Bohrbereichs in den Untergrund wird ein Sackloch erzeugt, was in Figur 2 (b) gezeigt ist. Gleichzeitig zum Erzeugen des Sacklochs erfährt das innere Element 150 einen Vortrieb in das sich bildende Sackloch. Dem Fachmann ist klar, dass entweder sich das innere Element bereits in einer Stellung befindet, in der der Spreizbereich 180 des inneren Elements 150 auf die Spreizzone 130 der Hülse 110 trifft und sofort eine Mitnahme der Hülse 110 mit einer Bewegung des inneren Elements 150 in den Untergrund hinein erfolgt, oder sich das innere Element in einer anderen Stellung befindet, so dass sich das innere Element 150 zunächst solange relativ zu Hülse 110 bewegt, bis der Spreizbereich 180 des inneren Elements 150 auf die Spreizzone 130 der Hülse 110 trifft. Die Spreizzone 130 dient als Barriere für den Spreizbereich 180 und verhindert eine weitere relative Bewegung. Infolgedessen wird die Hülse 110 durch das Auftreffen des Spreizbereichs 180 des inneren Elements 150 auf die Spreizzone 130 der Hülse mitgeführt, wenn das innere Element 150 weiteren Vortrieb in den Untergrund 200 hinein erfährt.

Sobald die Hülse 110 so weit mit dem inneren Element 150 mitgeführt wurde, dass der Haltebereich 140 auf den Untergrund 200 trifft und auf diesem aufliegt, setzt diese Auflage einem weiteren Mitführen der Hülse 110 mit dem inneren Element 150 eine Kraft entgegen, die dazu führt, dass sich die Hülse 110 nicht weiter in das Sackloch hinein bewegt. Erfährt das innere Element 150 durch das Eintreiben des Bohrbereichs 170 in den Untergrund einen Vortrieb, der ausreichend groß ist, beginnt das innere Element 150 sich erneut relativ zur Hülse 110 zu bewegen, wobei der Spreizbereich 180 sukzessive in die Spreizzone 130 eindringt und dadurch die Spreizzone 130 spreizt. Durch die Spreizung wird Material der Spreizzone 130 der Hülse 110 nach Außen gegen die Wände des Sacklochs im Untergrund gedrängt. Diese Verdrängung der Spreizzone 130 der Hülse 110 führt zu einer Reibung zwischen gespreizter Spreizzone 130 der Hülse 110 und den Wänden des Sacklochs, wodurch eine ausreichend hohe Verankerungskraft des Befestigungssystems 100 im Untergrund 200 erzeugt wird. Bei der Verdrängung des Materials der Spreizzone 130 der Hülse 110 kann beispielsweise ein Hinterschnitt erzeugt werden, der die Verankerungskraft weiter erhöht. Dies ist besonders bevorzugt, wenn die Spreizzone 130 der Hülse 110 zumindest teilweise aus Metall hergestellt ist. In einer anderen Ausführungsform kann die Verdrängung der Spreizzone 130 der Hülse 110 durch eine Verquetschung der Spreizzone 130 gegen die Wände des Sacklochs erreicht werden. Dies ist besonders bevorzugt, wenn die Spreizzone 130 der Hülse 110 aus Kunststoff hergestellt wird.

Figur 3 zeigt einen Querschnitt eines erfindungsgemäßen Befestigungssystems gemäß einer anderen beispielhaften Ausführungsform mit einem Halteteller für eine Dämmstoffplatte. Der Untergrund besteht in diesem Fall aus einem Verankerungsgrund 500 und einer Dämmstoffplatte 550.

Das Befestigungssystem in Figur 3 weist eine Hülse auf, die ein im Wesentlichen zylindrisches Element 420 aufweist. An einem vorderen Ende des zylindrischen Elements 420 befindet sich eine Spreizzone 430 und eine Bohröffnung, durch die ein inneres Element des Befestigungssystem teilweise herausragt. Während ein Spreizbereich 480 des inneren Elements innerhalb des zylindrischen Elements 420 der Hülse liegt, befindet sich ein Bohrbereich 470 des inneren Elements außerhalb der Bohröffnung der Hülse. An einem hinteren Ende weist der zylindrische Bereich 420 einen als Halteteller 440 ausgebildeten Haltebereich auf. Dieser Halteteller 440 ist angepasst, eine Dämmstoffplatte 550 an dem Verankerungsgrund 500 zu befestigen, wenn das in Figur 3 gezeigte Befestigungssystem montiert ist.

Die Funktionsweise des Befestigungssystems aus Figur 3 ist ähnlich des Befestigungssystems aus Figur 1. Jedoch ist der Haltebereich als Halteteller 440 für eine Dämmstoffplatte ausgebildet. Sobald der Halteteller auf die Dämmstoffplatte des Untergrunds trifft, setzt die Auflage des Haltetellers auf der Dämmstoffplatte einem weiteren Eindringen der Hülse in den Untergrund eine Kraft entgegen, die dazu führt, dass der Spreizbereich des inneren Elements bei weiterem Vortrieb des inneren Elements in den Untergrund zu einer Spreizung der Spreizzone führt.

Figur 4 zeigt eine Illustration eines Herstellungsverfahrens eines erfindungsgemäßen Befestigungsvorgangs. Figur 4 (a) zeigt exemplarische Präge- und Stanzwerkzeuge 700a-f, die geeignet sind, einen Hülsenrohling umfänglich einzupressen und dabei eine Spreizzone 630 im eingepressten Abschnitt der Hülse zu erzeugen. Der Fachmann wird verstehen, dass die Präge- und/oder Stanzwerkzeuge 700a-f beim umfänglichen Einpressen der Hülse zum einen die Außenwand der Hülse in das Innere der Hülse drücken und zum anderen in die Außenwände einschneiden können. Durch das Einschneiden können beispielsweise eine oder mehrere Solltrennstellen 635 erzeugt werden.

Figur 4 (a) zeigt im oberen Teil der Zeichnung eine Draufsicht auf die Präge- und/oder Stanzwerkzeuge 700a-f, die kreisförmig um einen Hülsenrohling mit eingesetztem inneren Element angeordnet ist. In dieser Ansicht sieht man drei Schneidelemente 675 des Bohrbereichs 670 des inneren Elements sowie die Spreizzone 630 im Rohlingzustand und den Haltebereich 640. Ein Querschnitt entlang der Linie A-A im oberen Teil der Zeichnung ist im unteren Teil der Zeichnung gezeigt. Im Querschnitt sieht man wie die Präge- und/oder Stanzwerkzeuge im vorderen Bereich der Hülse (d.h. an dem Ende, das die Bohröffnung aufweist) angreifen können, um eine Spreizzone 630 zu bilden. In Figur 4 (a) sind die Präge und/oder Stanzwerkzeuge 700a-f in Ausgangsstellung.

Figur 4 (b) zeigt den Zustand während des Herstellungsverfahrens, bei dem die Präge- und/oder Stanzwerkzeuge 700a-f auf den vorderen Bereich des Hülsenrohlings eingepresst werden, um die Spreizzone zu bilden. Wieder zeigt der obere Teil der Zeichnung eine Draufsicht und der untere Teil einen Querschnitt entlang der Linie A-A.

Figur 4 (c) zeigt den Zustand am Ende des Herstellungsverfahrens, das heißt nachdem die Präge- und/oder Stanzwerkzeuge 700a-f den vorderen Teil des Hülsenrohlings eingepresst haben, um die Spreizzone 630 zu bilden. Jetzt sind die Präge- und/oder Stanzwerkzeuge 700a-f wieder in Ausgangsstellung. Man erkennt in Figur 4 (c), dass die Präge- und/oder Stanzwerkzeuge 700a-f im Bereich der Spreizzone 630 Solltrennstellen 635 gebildet haben. An den Solltrennstellen 635 haben die Präge- und/oder Stanzwerkzeuge 700a-f das Material des Hülsenrohlings derart verdrängt, dass sich Vertiefungen gebildet haben, in denen das Material verjüngt ist und aufreißen kann, wenn der Spreizbereich des inneren Elements bei der Montage gegen die Spreizzone gedrängt wird. Wieder zeigt der obere Teil der Zeichnung eine Draufsicht und der untere Teil einen Querschnitt entlang der Linie A-A.

Einer der Vorteile des beschriebenen Herstellungsverfahrens ist, dass die Spreizzone 630 auf das innere Element eingepresst wird, wodurch eine Anordnung des inneren Elements innerhalb der Hülse ermöglicht wird. Aufgrund der Bereiche des inneren Elements mit den verschiedenen Durchmessern ergibt sich hierdurch ein Eingreifen der Spreizzone der Hülse in den Bereich zwischen Bohrbereich 670 und Spreizbereich des inneren Elements (vgl. Mulde 160 in Figur 1 (b)).

Der Fachmann wird verstehen, dass der Haltebereich 640 ebenfalls durch Präge- und/oder Stanzwerkzeuge gebildet werden kann. Dies kann vor, nach oder gleichzeitig mit Bildung der Spreizzone erfolgen. Alternativ kann der Haltebereich 640 vor oder nach Bildung der Spreizzone über einen Spanungsprozess gebildet werden.

Die obige Beschreibung enthält Ausführungsbeispiele von einer oder mehr Ausführungsformen der Erfindung. Selbstverständlich ist es nicht möglich jede denkbare Kombination der erfindungsgemäßen Komponenten und Verfahren in den zuvor genannten Ausführungsbeispielen zu beschreiben. Vielmehr wird ein Fachmann erkennen, dass es vielzählige weitere Kombinationen von weiteren Ausführungsformen gibt. Entsprechend sollen die beschriebenen Ausführungsbeispiele alle diese weiteren Kombinationen, Modifikationen, Variationen und Ausführungsformen umfassen, die unter den Geltungsbereich der angefügten Ansprüche fallen.

## Patentansprüche

1. Ein Befestigungssystem (100) zur Montage an einem Untergrund (200, 500), wobei das Befestigungssystem (100) eine Hülse (110) und ein inneres Element (150) aufweist,
wobei die Hülse (110) einen Haltebereich (140, 440, 640), eine Spreizzone (130, 430, 630) sowie an einem ihrer zwei Enden eine Bohröffnung (125a) und an dem anderen Ende eine Werkzeugöffnung (125b) aufweist, wobei die Spreizzone (130, 430, 630) zumindest teilweise zwischen dem Haltebereich (140, 440, 640) und der Bohröffnung (125a) angeordnet ist, und
wobei das innere Element (150) zumindest teilweise innerhalb der Hülse (110) angeordnet und relativ zur Hülse (110) beweglich ist, und
wobei das innere Element (150) einen Bohrbereich (170, 470, 670) und einen Spreizbereich (180, 480) aufweist, wobei der Bohrbereich (170, 470, 670) zumindest ein Schneidelement aufweist und der Bohrbereich (170, 470, 670) zumindest teilweise aus der Bohröffnung (125a) der Hülse (110) herausragt und der Spreizbereich (180, 480) des inneren Elements (150) angepasst ist bei einer Bewegung des Spreizbereichs (180, 480) in der Hülse (110) und relativ zur Hülse (110) in Richtung von der Werkzeugöffnung (125b) zur Bohröffnung (125a) die Spreizzone (130, 430, 630) der Hülse (110) aufzuspreizen;
**dadurch gekennzeichnet, dass** der Spreizbereich (180, 480) des inneren Elements (150) konisch geformt ist.

2. Das Befestigungssystem gemäß Anspruch 1, wobei die Spreizzone (130, 430, 630) der Hülse (110) im ungespreizten Zustand einen ersten äußeren Durchmesser aufweist und der Bohrbereich (170, 470, 670) des inneren Elements (150) einen maximalen zweiten äußeren Durchmesser aufweist und wobei der maximale zweite äußere Durchmesser und der erste äußere Durchmesser gleich groß sind oder der maximale zweite äußere Durchmesser größer als der erste äußere Durchmesser ist.

3. Das Befestigungssystem gemäß einem der vorhergehenden Ansprüche, wobei das innere Element (150) zumindest teilweise aus einem Metall gebildet ist.

4. Das Befestigungssystem gemäß Anspruch 3, wobei der Bohrbereich (170, 470, 670) des inneren Elements (150) zumindest teilweise aus einem Metall gebildet ist.

5. Das Befestigungssystem gemäß einem der vorhergehenden Ansprüche, wobei die Hülse (110) zumindest teilweise aus einem Metall oder einem Kunststoff gebildet ist.

6. Das Befestigungssystem gemäß einem der vorhergehenden Ansprüche, wobei der Haltebereich (140, 440, 640) der Hülse (110) zumindest abschnittsweise ausgebildet ist als eines von:
einem umlaufenden Vorsprung,
einem Halteteller (440) zum Halten von Dämmstoff, oder
einem konischen Bereich.

7. Das Befestigungssystem gemäß einem der vorhergehenden Ansprüche, wobei das innere Element (150) eine Aufnahme (190) für ein Setzwerkzeug (300) aufweist.

8. Ein Verfahren zur Montage eines Befestigungssystems (100) an einem Untergrund (200, 500), wobei das Befestigungssystem (100) ein Befestigungssystem gemäß einem der Ansprüche 1 bis 7 ist, und
wobei das Verfahren aufweist die Schritte von:
Eintreiben des inneren Elements (150) in den Untergrund und gleichzeitiges Mitführen der Hülse (110) mit der Bewegung des inneren Elements (150) solange bis der Haltebereich (140, 440, 640) der Hülse (110) einem weiteren Mitführen der Hülse (110) eine Kraft entgegensetzt; und
weiteres Eintreiben des inneren Elements (150) in den Untergrund, wodurch eine Relativbewegung zwischen innerem Element (150) und Hülse (110) erzeugt wird, und gleichzeitiges Spreizen der Spreizzone (130, 430, 630) der Hülse (110) mit dem Spreizbereich (180, 480) des inneren Elements (150) durch die Relativbewegung.

9. Ein Verfahren zur Herstellung eines Befestigungssystems (100) zur Montage an einem Untergrund (200, 500), das Verfahren aufweisend:
Bereitstellen einer Vielzahl von Präge- und/oder Stanzwerkzeugen;
Bereitstellen eines Hülsenrohlings, wobei der Hülsenrohling eine im Wesentlichen zylindrische Form, einen Haltebereich (140, 440, 640) sowie an einem seiner zwei Enden eine Bohröffnung (125a) und an dem anderen Ende eine Werkzeugöffnung (125b) aufweist;
Bereitstellen eines inneren Elements (150), wobei das innere Element (150) einen Bohrbereich (170, 470, 670) und einen Spreizbereich (180, 480) aufweist und wobei der Bohrbereich (170, 470, 670) zumindest ein daran angeordnetes Schneidelement aufweist und wobei der Spreizbereich (180, 480) des inneren Elements (150) konisch geformt ist;
Platzieren des inneren Elements (150) in dem Hülsenrohling;
umfängliches Einpressen, unter Verwendung der Vielzahl von Präge- und/oder Stanzwerkzeugen, zumindest eines Abschnitts des Hülsenrohlings auf das innere Element (150) und dadurch Bilden einer Spreizzone (130, 430, 630) in dem eingepressten Abschnitt, wobei sich der Abschnitt des Hülsenrohlings zwischen der Bohröffnung (125a) und der Werkzeugöffnung (125b) befindet, und wobei der Bohrbereich (170, 470, 670) des inneren Elements (150) nach dem umfänglichen Einpressen zumindest teilweise aus der Bohröffnung (125a) der Hülse (110) herausragt, und wobei der Spreizbereich (180, 480) des inneren Elements (150) angepasst ist bei einer Bewegung des Spreizbereichs (180, 480) in der Hülse (110) und relativ zur Hülse (110) in Richtung von der Werkzeugöffnung (125b) zur Bohröffnung (125a) die Spreizzone (130, 430, 630) der Hülse (110) aufzuspreizen; und
während des umfänglichen Einpressens, Erzeugen zumindest einer Solltrennstelle in der durch das Einpressen gebildeten Spreizzone unter Verwendung zumindest eines Präge- oder Stanzwerkzeugs.

## Claims

1. A fastening system (100) for mounting at a substrate (200, 500), the fastening system (100) comprising a sleeve (110) and an inner element (150),
wherein the sleeve (110) comprises a holding portion (140, 440, 640), a spreading zone (130, 430, 630) as well as a drill opening (125a) at one of the two ends of the sleeve (110) and a tool opening (125b) at the other end, wherein the spreading zone (130, 430, 630) is arranged at least partially between the holding portion (140, 440, 640) and the drill opening (125a), and
wherein the inner element (150) is arranged at least partially within the sleeve (110) and is movable relative to the sleeve (110), and
wherein the inner element (150) comprises a drilling portion (170, 470, 670) and a spreading portion (180, 480), wherein the drilling portion (170, 470, 670) comprises at least one cutting element and the drilling portion (170, 470, 670) projects at least partially out of the drill opening (125a) of the sleeve (110) and the spreading portion (180, 480) of the inner element (150) is adapted to spread the spreading zone (130, 430, 630) of the sleeve (110) upon a movement of the spreading portion (180, 480) in the sleeve (110) and relative to the sleeve (110) in the direction from the tool opening (125b) to the drill opening (125a);
**characterized in that** the spreading portion (180, 480) of the inner element (150) is conically shaped.

2. The fastening system according to claim 1, wherein the spreading zone (130, 430, 630) of the sleeve (110) comprises a first outer diameter in the unspread state and the drilling portion (170, 470, 670) of the inner element (150) comprises a maximum second outer diameter and wherein the maximum second outer diameter and the first outer diameter are of equal size or the maximum second outer diameter is larger than the first outer diameter.

3. The fastening system according to any one of the preceding claims, wherein the inner element (150) is formed at least partially from a metal.

4. The fastening system according to claim 3, wherein the drilling portion (170, 470, 670) of the inner element (150) is formed at least partially from a metal.

5. The fastening system according to any one of the preceding claims, wherein the sleeve (110) is formed at least partially from a metal or a plastic.

6. The fastening system according to any one of the preceding claims, wherein at least a portion of the holding portion (140, 440, 640) of the sleeve (110) is formed as one of:
a circumferential projection,
a holding plate (440) for holding insulating material, or
a conical portion.

7. The fastening system according to any one of the preceding claims, wherein the inner element (150) comprises a receptacle (190) for a setting tool (300).

8. A method for mounting a fastening system (100) at a substrate (200, 500), wherein the fastening system (100) is a fastening system according to any of claims 1 to 7, and
wherein the method comprises the steps of:
driving the inner element (150) into the substrate and simultaneously carrying the sleeve (110) along with the movement of the inner element (150) until the holding portion (140, 440, 640) of the sleeve (110) opposes a force to further carry the sleeve (110) along; and
further driving the inner element (150) into the substrate, whereby a relative movement is generated between the inner element (150) and the sleeve (110), and simultaneously spreading the spreading zone (130, 430, 630) of the sleeve (110) with the spreading portion (180, 480) of the inner element (150) by the relative movement.

9. A method for manufacturing a fastening system (100) for mounting at a substrate (200, 500), the method comprising:
providing a plurality of embossing and/or punching tools;
providing a sleeve blank, the sleeve blank having a substantially cylindrical shape, a holding portion (140, 440, 640) as well as a drill opening (125a) at one of the two ends of the sleeve (110) and a tool opening (125b) at the other end;
providing an inner element (150), wherein the inner element (150) comprises a drilling portion (170, 470, 670) and a spreading portion (180, 480) and wherein the drilling portion (170, 470, 670) comprises at least one cutting element arranged thereon and the spreading portion (180, 480) of the inner element (150) is conically shaped;
placing the first end of the inner element (150) in the sleeve blank;
circumferentially pressing, by using the plurality of embossing and/or punching tools, at least a portion of the sleeve blank onto the inner element (150) and thereby forming a spreading zone (130, 430, 630) in the pressed portion, wherein said portion of the sleeve blank is located between the drill opening (125a) and the tool opening (125b), and wherein the drilling portion (170, 470, 670) of the inner element (150) extends at least partially through the drill opening (125a) of the sleeve (110), and wherein the spreading portion (180, 480) of the inner element (150) is adapted to spread the spreading zone (130, 430, 630) of the sleeve (110) upon a movement of the spreading portion (180, 480) in the sleeve (110) and relative to the sleeve (110) in the direction from the tool opening (125b) to the drill opening (125a); and
during the circumferentially pressing, generating at least one predetermined separation point in the spreading zone formed by the pressing using at least one embossing or punching tool.

## Revendications

1. Un système de fixation (100) destiné à être monté sur un support (200, 500), dans lequel le système de fixation (100) présente un manchon (110) et un élément intérieur (150),
dans lequel le manchon (110) présente une zone de maintien (140, 440, 640), une zone d'écartement (130, 430, 630), ainsi qu'une ouverture de perçage (125a) sur l'une de ses deux extrémités et une ouverture d'outil (125b) sur l'autre extrémité, dans lequel la zone d'écartement (130, 430, 630) est disposée au moins en partie entre la zone de maintien (140, 440, 640) et l'ouverture de perçage (125a), et
dans lequel l'élément intérieur (150) est disposé au moins en partie à l'intérieur du manchon (110) et est mobile par rapport au manchon (110), et
dans lequel l'élément intérieur (150) présente une zone de perçage (170, 470, 670) et une zone d'écartement (180, 480), dans lequel la zone de perçage (170, 470, 670) présente au moins un élément de coupe et la zone de perçage (170, 470, 670) dépasse au moins en partie de l'ouverture de perçage (125a) du manchon (110), et la zone d'écartement (180, 480) de l'élément intérieur (150) est adaptée pour écarter la zone d'écartement (130, 430, 630) du manchon (110) lors d'un mouvement de la zone d'écartement (180, 480) dans le manchon (110) et par rapport au manchon (110) en direction de l'ouverture d'outil (125b) vers l'ouverture de perçage (125a) ;
**caractérisé en ce que** la zone d'écartement (180, 480) de l'élément intérieur (150) a une forme conique.

2. Le système de fixation selon la revendication 1, dans lequel la zone d'écartement (130, 430, 630) du manchon (110) présente un premier diamètre extérieur dans l'état non écarté et la zone de perçage (170, 470, 670) de l'élément intérieur (150) présente un deuxième diamètre extérieur maximal, et dans lequel le deuxième diamètre extérieur maximal et le premier diamètre extérieur sont égaux ou le deuxième diamètre extérieur maximal est supérieur au premier diamètre extérieur.

3. Le système de fixation selon l'une des revendications précédentes, dans lequel l'élément intérieur (150) est formé au moins en partie à partir d'un métal.

4. Le système de fixation selon la revendication 3, dans lequel la zone de perçage (170, 470, 670) de l'élément intérieur (150) est formée au moins en partie à partir d'un métal.

5. Le système de fixation selon l'une des revendications précédentes, dans lequel le manchon (110) est formé au moins en partie à partir d'un métal ou d'un plastique.

6. Le système de fixation selon l'une des revendications précédentes, dans lequel la zone de maintien (140, 440, 640) du manchon (110) est réalisée au moins par sections comme l'une parmi :
une partie faisant saillie périphérique,
une plaque de maintien (440) pour maintenir du matériau isolant, ou
une zone conique.

7. Le système de fixation selon l'une des revendications précédentes, dans lequel l'élément intérieur (150) présente un logement (190) pour un outil de pose (300).

8. Un procédé de montage d'un système de fixation (100) sur un support (200, 500), dans lequel le système de fixation (100) est un système de fixation selon l'une des revendications 1 à 7, et
dans lequel le procédé présente des étapes :
d'enfoncement de l'élément intérieur (150) dans le support et l'entraînement simultané du manchon (110) avec le mouvement de l'élément intérieur (150) jusqu'à ce que la zone de maintien (140, 440, 640) du manchon (110) oppose une force à un autre entraînement du manchon (110) ; et
d'enfoncement supplémentaire de l'élément intérieur (150) dans le support, créant ainsi un mouvement relatif entre l'élément intérieur (150) et le manchon (110), ainsi que d'écartement simultané de la zone d'écartement (130, 430, 630) du manchon (110) avec la zone d'écartement (180, 480) de l'élément intérieur (150) par le mouvement relatif.

9. Un procédé de fabrication d'un système de fixation (100) pour le montage sur un support (200, 500), le procédé présentant :
la préparation d'une pluralité d'outils d'estampage et/ou de découpe ;
la préparation d'une ébauche de manchon, dans lequel l'ébauche de manchon présente une forme sensiblement cylindrique, une zone de maintien (140, 440, 640) ainsi qu'une ouverture de perçage (125a) sur l'une de ses deux extrémités et une ouverture d'outil (125b) sur l'autre extrémité ;
la préparation d'un élément intérieur (150), dans lequel l'élément intérieur (150) présente une zone de perçage (170, 470, 670) et une zone d'écartement (180, 480), dans lequel la zone de perçage (170, 470, 670) présente au moins un élément de coupe disposé dessus, et dans lequel la zone d'écartement (180, 480) de l'élément intérieur (150) a une forme conique ;
le placement de l'élément intérieur (150) dans l'ébauche de manchon ;
l'emmanchement complet, à l'aide d'une pluralité d'outils d'estampage et/ou de découpe, d'au moins une section de l'ébauche de manchon sur l'élément intérieur (150), entraînant ainsi la formation d'une zone d'écartement (130, 430, 630) dans la section emmanchée, dans lequel la section de l'ébauche de manchon se trouve entre l'ouverture de perçage (125a) et l'ouverture d'outil (125b), et dans lequel la zone de perçage (170, 470, 670) de l'élément intérieur (150) dépasse au moins en partie de l'ouverture de perçage (125a) du manchon (110) après l'emmanchement complet, et dans lequel la zone d'écartement (180, 480) de l'élément intérieur (150) est adaptée pour écarter la zone d'écartement (130, 430, 630) du manchon (110) lors d'un mouvement de la zone d'écartement (180, 480) dans le manchon (110) et par rapport au manchon (110) en direction de l'ouverture d'outil (125b) vers l'ouverture de perçage (125a) ; et
pendant l'emmanchement complet, la création d'au moins un point de séparation théorique dans la zone d'écartement formée par l'emmanchement à l'aide d'au moins un outil d'estampage ou de découpe.
